(19) **Europäisches Patentamt / European Patent Office / Office européen des brevets**

(11) **EP 4 693 338 A1**

(12) **EUROPEAN PATENT APPLICATION**
published in accordance with Art. 153(4) EPC

(43) Date of publication:
**11.02.2026 Bulletin 2026/07**

(21) Application number: **23930380.3**

(22) Date of filing: **28.03.2023**

(51) International Patent Classification (IPC):
***H01B 1/06*** (2006.01)

(52) Cooperative Patent Classification (CPC):
**H01B 1/06;** Y02E 60/10

(86) International application number:
**PCT/JP2023/012624**

(87) International publication number:
**WO 2024/201740 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **NGK Insulators, Ltd.**
**Nagoya-shi, Aichi 467-8530 (JP)**

(72) Inventors:
• **SUTO, Yusaku**
**Nagoya-shi, Aichi 467-8530 (JP)**
• **NISHIZAKI, Tsutomu**
**Nagoya-shi, Aichi 467-8530 (JP)**
• **YOSHIDA, Toshihiro**
**Nagoya-shi, Aichi 467-8530 (JP)**

(74) Representative: **Mewburn Ellis LLP**
**Aurora Building**
**Counterslip**
**Bristol BS1 6BX (GB)**

(54) **SOLID ELECTROLYTE AND LITHIUM-ION BATTERY**

(57) A solid electrolyte contains Li, M$\alpha$, M$\beta$, M$\gamma$, Cl, and F. M$\alpha$ is at least one element selected from the group consisting of Zr and Hf, M$\beta$ is at least one element selected from the group consisting of Ta and Nb, and M$\gamma$ is at least one element selected from the group consisting of Gd, Yb, Dy, Er, Ho, Eu, and Sc. This provides the solid electrolyte with excellent resistance to reduction.

FIG. 1

## Description

### TECHNICAL FIELD

The present invention relates to a solid electrolyte and a lithium-ion battery.

### BACKGROUND ART

In recent years, there is a strong demand for downsizing and improved reliability (safety) of batteries serving as power sources for electronic equipment. Thus, attention has been placed on all-solid-state batteries using solid electrolytes. Halides are known as solid electrolytes that contain no sulfur, and $Li_3YCl_6$ exhibits high Li ionic conductivity at ambient temperature (see, for example, Japanese Patent No. 6934626 (Document 1)). International Publication No. 2020/070956 (Document 2) discloses a solid-state halide electrolyte material expressed by $Li_{6-4b+ab}(Zr_{1-a}M_a)_bX_6$. Here, M is at least one type of element selected from the group consisting of Al, Ga, Bi, Sc, Sm, and Sb, X is a halogen element, and $0 < a < 1$ and $0 < b < 1.5$ are satisfied.

As described previously, chloride electrolytes such as $Li_3YCl_6$ exhibit high ionic conductivity at ambient temperature, but there is no information disclosed about stability. The inventors of the present application have prepared the solid electrolytes disclosed in Documents 1 and 2 described above and left these solid electrolytes at rest in a dry room with a dew point controlled at -40°C. As a result, they have found that the electrolytes were decomposed and could not maintain their initial ionic conductivity, i.e., had low stability (resistance to humidity). In view of this, in order to improve the stability of chloride electrolytes, the inventors of the present application have prepared materials by combining various cations (M) in $Li_xMCl_6$ and searched for a combination of cations that achieves high stability. As a result, a combination of cations that exhibits high ionic conductivity and high stability has been identified, which will be described later as related technology. On the other hand, solid electrolytes are required to have improved resistance to reduction in order to improve energy density in all-solid-state batteries.

### SUMMARY OF THE INVENTION

The present invention is intended for a solid electrolyte, and it is an object of the present invention to provide a solid electrolyte with excellent resistance to reduction.

Aspect 1 of the present invention is a solid electrolyte that contains Li, Mα, Mβ, Mγ, Cl, and F. Mα is at least one element selected from a group consisting of Zr and Hf, Mβ is at least one element selected from a group consisting of Ta and Nb, and Mγ is at least one element selected from a group consisting of Gd, Yb, Dy, Er, Ho, Eu, and Sc.

According to the present invention, it is possible to provide the solid electrolyte with excellent resistance to reduction.

Aspect 2 of the present invention is the solid electrolyte according to Aspect 1, in which Mα includes Zr.

Aspect 3 of the present invention is the solid electrolyte according to Aspect 1 or 2, in which Mβ includes Ta.

Aspect 4 of the present invention is the solid electrolyte according to any one of Aspects 1 to 3, in which Mγ includes Gd, Yb, or Er.

Aspect 5 of the present invention is the solid electrolyte according to any one of Aspects 1 to 4. The solid electrolyte is expressed by a composition formula (1) below:

$$Li_{6-(4+a-b)(1+c)}(M\alpha_{(1-a-b)}M\beta_aM\gamma_b)_{1+c}Cl_{6-d}F_d \dots \qquad (1),$$

where $0 < a$, $0 < b$, $a + b < 1$, $-0.2 \leq c \leq 0.2$, and $0 < d < 6$ are satisfied.

Aspect 6 of the present invention is the solid electrolyte according to any one of Aspects 1 to 5, in which a value obtained by dividing a mean ionic radius of Li, Mα, Mβ, and Mγ by a mean ionic radius of Cl and F is greater than 0.31 and less than 0.43, and a difference $\Delta\chi$ between mean electronegativity of Cl and F and mean electronegativity of Mα, Mβ, and Mγ is greater than 1.842.

Aspect 7 of the present invention is a lithium-ion battery that includes the solid electrolyte according to any one of Aspects 1 to 6.

These and other objects, features, aspects and advantages of the present invention will become more apparent from the following detailed description of the present invention when taken in conjunction with the accompanying drawings.

### BRIEF DESCRIPTION OF DRAWINGS

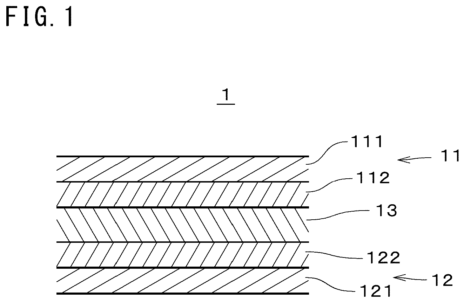

Fig. 1 is a longitudinal sectional view of an all-solid-state lithium-ion secondary battery.

## DESCRIPTION OF EMBODIMENTS

First, a solid electrolyte according to related technology of the present invention will be described. The solid electrolyte according to the related technology is a lithium (Li)-ion conductive material and contains a lithium (Li) element, other three types of metallic ($M\alpha$, $M\beta$, $M\gamma$) elements serving as cations, and a chlorine (Cl) element.

$M\alpha$ is an element serving as a tetravalent cation and is at least one element selected from the group consisting of zirconium (Zr) and hafnium (Hf). $M\beta$ is an element serving as a pentavalent cation and is at least one element selected from the group consisting of tantalum (Ta) and niobium (Nb). $M\gamma$ is an element serving as a trivalent cation and is at least one element selected from the group consisting of gadolinium (Gd), ytterbium (Yb), dysprosium (Dy), erbium (Er), holmium (Ho), europium (Eu), and scandium (Sc). The solid electrolyte that contains at least one type of trivalent element, at least one type of quadrivalent element, and at least one type of pentavalent element as cations, in addition to Li, achieves high ionic conductivity and high stability.

One preferable example of the solid electrolyte according to the related technology is a compound expressed by the following composition formula:

$$Li_{6-(4+a-b)(1+c)}(M\alpha_{(1-a-b)}M\beta_a M\gamma_b)_{1+c}Cl_6,$$

where $0 < a$, $0 < b$, $a + b < 1$, and $-0.2 \leq c \leq 0.2$ are satisfied.

Next, a solid electrolyte according to one embodiment of the present invention will be described. The solid electrolyte is a Li-ion conductive material obtained by adding fluorine (F) to the solid electrolyte according to the related technology described above. For example, the solid electrolyte may be used in the production of an all-solid-state secondary battery. The solid electrolyte contains a Li element, other three types of metallic ($M\alpha$, $M\beta$, $M\gamma$) elements serving as cations, a Cl element, and a F element. The solid electrolyte may contain only Li, $M\alpha$, $M\beta$, $M\gamma$, Cl, and F.

As in the solid electrolyte according to the related technology described above, $M\alpha$ is an element serving as a tetravalent cation and is at least one element selected from the group consisting of Zr and Hf. $M\beta$ is an element serving as a pentavalent cation and is at least one element selected from the group consisting of Ta and Nb. $M\gamma$ is an element serving as a trivalent cation and is at least one element selected from the group consisting of Gd, Yb, Dy, Er, Ho, Eu, and Sc. The solid electrolyte according to the present embodiment also achieves high ionic conductivity and high stability because it contains at least one type of trivalent element, at least one type of quadrivalent element, and at least one type of pentavalent element as cations, in addition to Li. The solid electrolyte further contains F, thus achieving high resistance to reduction as will be described later. Since the solid electrolyte generates no hydrogen sulfide gases, it is possible to provide an all-solid-state secondary battery with high safety.

In order for the solid electrolyte according to the present embodiment to more reliably achieve high resistance to reduction, $M\alpha$ preferably includes Zr and may include only Zr. $M\beta$ preferably includes Ta and may include only Ta. $M\gamma$ preferably includes Gd, Yb, or Er and may include only Gd, Yb, or Er. $M\gamma$ may include two or more elements selected from among Gd, Yb, and Er. For example, the amount of substance of Li is greater than the amount of substance of any of $M\alpha$, $M\beta$, and $M\gamma$ and preferably greater than a total of the amounts of substance of $M\alpha$, $M\beta$, and $M\gamma$. The amount of substance of Cl is, for example, greater than a total of the amounts of substance of Li, $M\alpha$, $M\beta$, and $M\gamma$. The amount of substance of F is, for example, less than one half the amount of substance of Cl and preferably less than one fourth the amount of substance of Cl.

A preferable solid electrolyte is a compound expressed by the following composition formula (1):

$$Li_{6-(4+a-b)(1+c)}(M\alpha_{(1-a-b)}M\beta_a M\gamma_b)_{1+c}Cl_{6-d}F_d \ldots \qquad (1),$$

where $0 < a$, $0 < b$, $a + b < 1$, $-0.2 \leq c \leq 0.2$, and $0 < d < 6$ are satisfied. Here, $a$ and $b$ may satisfy $0.1 \leq a \leq 0.5$ and $0.1 \leq b \leq 0.4$. Alternatively, $a$ and $b$ may satisfy $0.2 \leq a + b \leq 0.8$. By way of example, the relationship between $a$ and $b$ is expressed as $a \geq b$, but it may also be expressed as $a < b$. Here, $c$ may satisfy $-0.1 \leq c \leq 0.1$ or may be zero, and $d$ may satisfy $0 < d < 3$. Preferably, $d$ satisfies $0 < d \leq 2$ and more preferably satisfies $0 < d \leq 1$. A lower limit for $d$ may be 0.1. The solid electrolyte may be either crystalline or amorphous.

In the case of checking whether an unknown solid electrolyte is the solid electrolyte according to the present embodiment, chemical analysis is conducted on the unknown solid electrolyte to check whether Li, $M\alpha$, $M\beta$, $M\gamma$, Cl, and F are constituent elements of the unknown solid electrolyte. To check whether the unknown solid electrolyte is expressed by the composition formula (1) given above, for example, Li, $M\alpha$, $M\beta$, and $M\gamma$ can be quantitated by an ICP emission spectral analysis method or the like. For example, Cl and F can be quantitated by ion chromatography or the like.

The molar ratio of Li, $M\alpha$, $M\beta$, $M\gamma$, Cl, and F in the composition formula (1) given above becomes as follows: $Li:M\alpha:M\beta:M\gamma:Cl:F = 6-(4+a-b)(1+c):(1-a-b)(1+c):a(1+c):b(1+c):6-2d:d$. If the value of Li in the molar ratio obtained by the analysis conducted on the unknown solid electrolyte is greater than or equal to $0.90 \times \{6-(4+a-b)(1+c)\}$ and less than or equal to $1.10 \times \{6-(4+a-b)(1+c)\}$, Li is considered to satisfy the above composition formula (1). More preferably, the value of Li is greater than or equal to 0.95×{6-(4+a-b)(1+c)} and less than or equal to 1.05×{6-(4+a-b)(1+c)}. The same also applies to Mα, Mβ, Mγ, Cl, and F.

In a preferable solid electrolyte, the value obtained by dividing a mean ionic radius of Li, Mα, Mβ, and Mγ by a mean ionic radius of Cl and F (hereinafter, the value is referred to as a "mean ionic radius ratio") is greater than 0.31 and less than 0.43, and a difference $\Delta\chi$ between mean electronegativity of Cl and F and mean electronegativity of Mα, Mβ, and Mγ is a value greater than 1.842. The mean ionic radius ratio is more preferably less than 0.426 and yet more preferably less than 0.424. $\Delta\chi$ is more preferably a value greater than 1.846 and yet more preferably a value greater than 1.850. Such a solid electrolyte can more reliably improve stability as will be described later. There are no particular limitations on the upper limit for $\Delta\chi$, but the upper limit may, for example, be 2.735. The mean ionic radius ratio is computed using Expressions 1 and 2, and the difference $\Delta$ in mean electronegativity is computed using Expression 3.

Expression 1

$$rc = \Sigma(rC \cdot RC)/\Sigma RC$$

Expression 2

$$ra = \Sigma(rA \cdot RA)/\Sigma RA$$

In Expression 1, rC denotes the ionic radius of an element (i.e., cation) included in Li, Mα, Mβ, and Mγ. RC denotes the mole amount of each element. In Expression 2, rA denotes the ionic radius of each of Cl and F (i.e., anions), and RA denotes the mole amount of each element. The mean ionic radius ratio (rc/ra) is obtained by dividing the mean ionic radius (rc) of Li, Mα, Mβ, and Mγ by the mean ionic radius (ra) of Cl and F. A solid electrolyte with a mean ionic radius ratio of higher than 0.31 and lower than 0.43 is considered to have an appropriately short bond distance between cations and anions and have higher bonding force between the cations and the anions. This high bonding force is assumed to improve the stability of the material.

Expression 3

$$\Delta\chi = \Sigma(XA \cdot RA)/\Sigma RA - \Sigma(XC \cdot RC)/\Sigma RC$$

In Expression 3, XA denotes the electronegativity of each of Cl and F (i.e., anions), and XC denotes the electronegativity of each of Mα, Mβ, and Mγ (i.e., cations excluding Li). The electrolyte whose $\Delta\chi$ is greater than 1.842 is considered to have high ionic bonding properties and accordingly have high bonding force between anions and cations excluding Li. This high bonding force is assumed to improve the stability of the material.

The solid electrolyte according to the present embodiment is produced by, for example, the following method. Firstly, powder of a compound that contains Li, powder of a compound that contains Mα, powder of a compound that contains Mβ, and powder of a compound that contains Mγ are prepared. Some of the compounds are chlorides, and the remaining compounds are fluorides. Alternatively, fluorides and chlorides that contain the same metallic elements may be prepared. For example, a chloride containing Li is LiCl, and a fluoride containing Li is LiF. For example, a chloride containing Mα is $M\alpha Cl_4$, and a fluoride containing Mα is $M\alpha F_4$. For example, a chloride containing Mβ is $M\beta Cl_5$, and a fluoride containing Mβ is $M\beta F_5$. For example, a chloride containing Mγ is $M\gamma Cl_3$, and a fluoride containing Mγ is $M\gamma F_3$. The powder of these compounds is weighted and mixed together in a predetermined molar ratio.

Then, a resultant mixture is subjected to a milling process (mechanochemical milling). In one example of the milling process, a planetary ball mill is used. In the planetary ball mill, a stage with a pot placed thereon revolves while the pot rotates on its axis, so that remarkably high impact energy can be generated. The milling process may also be performed by using any other type of pulverizer. Through the aforementioned milling process, the solid electrolyte according to the present embodiment is obtained. The solid electrolyte is used in the production of a positive electrode layer 112, a negative electrode layer 122, or an electrolyte layer 13 of an all-solid-state secondary battery 1 (see Fig. 1), which will be described later. In the present processing example, the milling process is conducted at ordinary temperatures, but conditions such as temperature may be changed as appropriate. Alternatively, the solid electrolyte according to the present embodiment may also be produced by any other processing such as firing other than the milling process.

Fig. 1 is a longitudinal sectional view of the all-solid-state lithium-ion secondary battery 1 (hereinafter, simply referred to as the "all-solid-state secondary battery 1"). The all-solid-state secondary battery 1 uses the solid electrolyte according to the present embodiment. The all-solid-state secondary battery 1 includes a positive electrode 11, the electrolyte layer 13, and a negative electrode 12 in order from the top of Fig. 1. That is, the electrolyte layer 13 is provided between the positive electrode 11 and the negative electrode 12. The electrolyte layer 13 is a solid-state electrolyte layer and serves also as a separator layer. The electrolyte layer 13 is formed of or contains the solid electrolyte according to the present embodiment. The positive electrode 11 includes a current collector 111 and the positive electrode layer 112. The positive electrode layer 112 contains a positive active material. The negative electrode 12 includes a current collector 121 and the negative electrode layer 122. The negative electrode layer 122 contains a negative active material.

Preferably, the positive active material of the positive electrode layer 112 includes a lithium complex oxide. A preferable positive active material is a lithium complex oxide having a layered rock-salt structure and may, for example, be NCM ($Li(Ni, Co, Mn)O_2$). The positive active material may also be any other lithium complex oxide, and examples thereof include NCA ($Li(Ni, Co, Al)O_2$) or LCO ($LiCoO_2$) having a layered rock-salt structure, LNMO ($LiNi_{0.5}Mn_{1.5}O_4$) having a spinel structure, and LFP ($LiFePO_4$) having an olivine structure. In addition to the positive active material, the positive electrode layer 112 further contains the solid electrolyte according to the present embodiment. The positive electrode layer 112 may further contain an electron conductive agent (e.g., carbon black). By way of example, the positive electrode layer 112 may be obtained by integrating those substances together by applying pressure or heat.

Examples of the negative active material of the negative electrode layer 122 include compounds such as LTO ($Li_4Ti_5O_{12}$), NTO ($Nb_2TiO_7$), $TiO_2$ (titanium oxides), graphite, and SiO (silicon monoxide). In addition to the negative active material, the negative electrode layer 122 further contains the solid electrolyte according to the present embodiment. The negative electrode layer 122 may further contain an electron conductive agent (e.g., carbon black). By way of example, the negative electrode layer 122 may be obtained by integrating those substances together by applying pressure or heat. The configurations and materials of the positive electrode 11 and the negative electrode 12 in the all-solid-state secondary battery 1 are not limited to the examples described above, and various other configurations and materials are adoptable.

Next, examples of the solid electrolyte and comparative examples therefor will be described. Tables 1 to 4 show the compositions of solid electrolytes according to Examples 1 to 5 and Comparative Examples 1 to 4 and the results of evaluation therefor. The solid electrolytes according to Comparative Examples 1 to 4 are the solid electrolyte according to the related technology described above.

Table 1

| | Solid Electrolyte | Reduction Onset Potential [V vs. Li] | Quantity of Electricity during Decomposition down to 0.1V [C] | rc/ra | $\Delta\chi$ | Satisfy Conditions for rc/ra and $\Delta\chi$ |
|---|---|---|---|---|---|---|
| Example 1 | $Li_{2.0}Zr_{0.6}Ta_{0.2}Yb_{0.2}Cl_{5.85}F_{0.15}$ | 1.31 | 0.108 | 0.418 | 1.863 | ○ |
| Example 2 | $Li_{2.0}Zr_{0.6}Ta_{0.2}Yb_{0.2}Cl_{5.7}F_{0.3}$ | 1.30 | 0.09 | 0.421 | 1.883 | ○ |
| Comparative Example 1 | $Li_{2.0}Zr_{0.6}Ta_{0.2}Yb_{0.2}Cl_6$ | 1.47 | 0.151 | 0.415 | 1.842 | × |

Table 2

| | Solid Electrolyte | Reduction Onset Potential [V vs. Li] | Quantity of Electricity during Decomposition down to 0.1V [C] | rc/ra | $\Delta\chi$ | Satisfy Conditions for rc/ra and $\Delta\chi$ |
|---|---|---|---|---|---|---|
| Example 3 | $Li_{1.9}Zr_{0.7}Ta_{0.2}Dy_{0.1}Cl_{5.4}F_{0.6}$ | 1.14 | 0.063 | 0.424 | 1.889 | ○ |
| Comparative Example 2 | $Li_{1.9}Zr_{0.7}Ta_{0.2}Dy_{0.1}Cl_6$ | 1.22 | 0.141 | 0.413 | 1.807 | × |

Table 3

| | Solid Electrolyte | Reduction Onset Potential [V vs. Li] | Quantity of Electricity during Decomposition down to 0.1V [C] | rc/ra | $\Delta\chi$ | Satisfy Conditions for rc/ra and $\Delta\chi$ |
|---|---|---|---|---|---|---|
| Example 4 | $Li_{1.9}Zr_{0.5}Nb_{0.3}Yb_{0.2}Cl_{5.4}F_{0.6}$ | 1.11 | 0.035 | 0.425 | 1.877 | ○ |

(continued)

| | Solid Electrolyte | Reduction Onset Potential [V vs. Li] | Quantity of Electricity during Decomposition down to 0.1V [C] | rc/ra | $\Delta\chi$ | Satisfy Conditions for rc/ra and $\Delta\chi$ |
|---|---|---|---|---|---|---|
| Comparative Example 3 | $Li_{1.9}Zr_{0.5}Nb_{0.3}Yb_{0.2}Cl_6$ | 1.49 | 0.087 | 0.413 | 1.795 | × |

Table 4

| | Solid Electrolyte | Reduction Onset Potential [V vs. Li] | Quantity of Electricity during Decomposition down to 0.1V [C] | rc/ra | $\Delta\chi$ | Satisfy Conditions for rc/ra and $\Delta\chi$ |
|---|---|---|---|---|---|---|
| Example 5 | $Li_{1.75}Zr_{0.25}Ta_{0.5}Er_{0.25}Cl_{5.4}F_{0.6}$ | 1.10 | 0.040 | 0.424 | 1.850 | ○ |
| Comparative Example 4 | $Li_{1.75}Zr_{0.25}Ta_{0.5}Er_{0.25}Cl_6$ | 1.30 | 0.103 | 0.412 | 1.768 | × |

Example 1

Preparation of Electrolyte

In an argon atmosphere with a dew point of -60°C or lower, LiCl, $ZrCl_4$, $TaCl_5$, $YbCl_3$, and LiF serving as raw powder were weighed in a molar ratio $LiCl:ZrCl_4:TaCl_5:YbCl_3:LiF$ of 1.85:0.6:0.2:0.2:0.15, and the raw powder of these substances was pulverized and mixed together in a mortar. Resultant mixed powder was poured into a zirconia pot and milled at 300 rpm for 20 hours (h) by using a planetary ball mill to obtain solid electrolyte powder.

Evaluation of Reduction Stability

The solid electrolyte powder was poured into a mold made from a resinous sleeve and upper and lower SUS (stainless steel) punches and was uniaxially press-molded by the application of pressure at 150 MPa. Thereafter, the lower punch was taken out, the surface of a powder compact was coated with Li metallic foil, and the lower punch was inserted again and pressed by the application of pressure at 50 MPa. Then, conductors were respectively connected to the upper and lower punches, and cyclic voltammetry measurement was conducted at ambient temperature.

In the cyclic voltammetry measurement, a working electrode was scanned from an OCV (open circuit voltage) during cell construction to -1.0V (vs. Li) in a reduction direction at a scanning speed of 1 mV/sec. To quantitate stability under a reduction potential, a potential at which the reduction current on the working electrode per unit area exceeded -20 $\mu V/cm^2$ during scanning from the OCV in the reduction direction was defined as a reduction onset potential. Table 1 shows the obtained value in the "Reduction Onset Potential" column (the same also applies to Tables 2 to 4).

In the evaluation of reduction stability, the quantity of electricity generated by reduction decomposition was computed. Using the operating potential (0.1V vs. Li) of graphite commonly used as the negative active material of the lithium-ion battery as a reference, stability under the potential of the negative electrode was quantitatively evaluated by computing the quantity of electricity (in units of coulomb [C]) obtained by integration of the reduction current that had flowed from the aforementioned reduction onset potential to 0.1V. Table 1 shows the obtained value in the "Quantity of Electricity during Decomposition down to 0.1V" column (the same also applies to Tables 2 to 4).

Computation of Mean Ionic Radius Ratio

A mean ionic radius ratio of the solid electrolyte according to Example 1 was computed using Expressions 1 and 2 described above. Here, the solid electrolyte according to Example 1 contained Li, Zr, Ta, and Yb as cations and Cl and F as anions. The ionic radii (with coordination number 6) of Li, Zr, Ta, Yb, Cl and F were 0.76 Å, 0.72 Å, 0.64 Å, 0.868 Å, 1.81 Å, and 1.33 Å, respectively. The molar ratio of Li, Zr, Ta, and Yb was 2.000:0.600:0.200:0.200. Thus, a mean ionic radius rc of the cations was computed as 0.7512 Å by computation of (2.000 × 0.76 + 0.600 × 0.72 + 0.200 × 0.64 + 0.200 × 0.868)/(2.000 + 0.600 + 0.200 + 0.200). A mean ionic radius ra of the anions was computed as 1.798 Å by computation of (5.850 × 1.81 + 0.150 × 1.33)/(5.850 + 0.150). Accordingly, the mean ionic radius ratio was computed as 0.418 by computation of rc/ra.

Computation of $\Delta\chi$

In the solid electrolyte according to Example 1, $\Delta\chi$ was computed using Expression 3 described above. The solid electrolyte according to Example 1 contained Zr, Ta, and Yb as cations, in addition to Li, and contained Cl and F as anions. Zr, Ta, Yb, Cl and F had electronegativities of 1.33, 1.5, 1.1, 3.16, and 3.98, respectively. The molar ratio of Zr, Ta, Yb, Cl and F was 0.600: 0.200:0.200:5.850:0.150. Thus, $\Delta\chi$ was computed as 1.863 by computation of (5.850 × 3.16 + 0.150 × 3.98)/(5.850 + 0.150) - (0.600 × 1.33 + 0.200 × 1.5 + 0.200 × 1.1)/(0.600 + 0.200 + 0.200).

In the "Satisfy Conditions for rc/ra and $\Delta\chi$" column in Table 1, the evaluation result was "∘ (circle)" when 0.31 < (rc/ra) < 0.43 and $\Delta\chi$ > 1.842 were both satisfied at the same time, and the evaluation result was "× (cross)" when the two conditions were not satisfied at the same time (the same also applies to Tables 2 to 4).

Example 2

The electrolyte was prepared, tested, and evaluated in the same manner as in Example 1 described above, except that in the preparation of the electrolyte according to Example 1, LiCl, $ZrCl_4$, $TaCl_5$, $YbCl_3$, and LiF serving as raw powder were weighed in a molar ratio LiCl:$ZrCl_4$:$TaCl_5$:$YbCl_3$:LiF of 1.7:0.6:0.2:0.2:0.3.

Example 3

The electrolyte was prepared, tested, and evaluated in the same manner as in Example 1 described above, except that in the preparation of the electrolyte according to Example 1, LiCl, $ZrCl_4$, $TaCl_5$, $DyCl_3$, and $ZrF_4$ serving as raw powder were weighed in a molar ratio LiCl:$ZrCl_4$:$TaCl_5$:$DyCl_3$:$ZrF_4$ of 1.9:0.55:0.2:0.1:0.15.

Example 4

The electrolyte was prepared, tested, and evaluated in the same manner as in Example 1 described above, except that in the preparation of the electrolyte according to Example 1, LiCl, $ZrCl_4$, $NbCl_5$, $YbCl_3$, and $ZrF_4$ serving as raw powder were weighed in a molar ratio LiCl:$ZrCl_4$:$NbCl_5$:$YbCl_3$:$ZrF_4$ of 1.9:0.35:0.3:0.2:0.15.

Example 5

The electrolyte was prepared, tested, and evaluated in the same manner as in Example 1 described above, except that in the preparation of the electrolyte according to Example 1, LiCl, $ZrCl_4$, $TaCl_5$, $ErCl_3$, and $ZrF_4$ serving as raw powder were weighed in a molar ratio LiCl:$ZrCl_4$:$TaCl_5$:$ErCl_3$:$ZrF_4$ of 1.75:0.1:0.5:0.25:0.15.

Comparative Example 1

The electrolyte was prepared, tested, and evaluated in the same manner as in Example 1 described above, except that in the preparation of the electrolyte according to Example 1, LiCl, $ZrCl_4$, $TaCl_5$, and $YbCl_3$ serving as raw powder were weighed in a molar ratio LiCl:$ZrCl_4$:$TaCl_5$:$YbCl_3$ of 2.0:0.6:0.2:0.2.

Comparative Example 2

The electrolyte was prepared, tested, and evaluated in the same manner as in Example 1 described above, except that in the preparation of the electrolyte according to Example 1, LiCl, $ZrCl_4$, $TaCl_5$, and $DyCl_3$ serving as raw powder were weighed in a molar ratio LiCl:$ZrCl_4$:$TaCl_5$:$DyCl_3$ of 1.9:0.7:0.2:0.1.

Comparative Example 3

The electrolyte was prepared, tested, and evaluated in the same manner as in Example 1 described above, except that in the preparation of the electrolyte according to Example 1, LiCl, $ZrCl_4$, $NbCl_5$, and $YbCl_3$ serving as raw powder were weighed in a molar ratio LiCl:$ZrCl_4$:$NbCl_5$:$YbCl_3$ of 1.9:0.5:0.3:0.2.

Comparative Example 4

The electrolyte was prepared, tested, and evaluated in the same manner as in Example 1 described above, except that in the preparation of the electrolyte according to Example 1, LiCl, $ZrCl_4$, $TaCl_5$, and $ErCl_3$ serving as raw powder were weighed in a molar ratio $LiCl:ZrCl_4:TaCl_5:ErCl_3$ of 1.75:0.25:0.5:0.25.

Table 1 shows the comparison of Examples 1 and 2 and Comparative Example 1 that used the same composition ratio of Li, Zr, Ta, and Yb. In Examples 1 and 2 that contained F, a decrease in reduction onset potential was observed, and also a decrease in the quantity of electricity during decomposition down to 0.1V was observed, as compared with Comparative Example 1 that did not contain F. Tables 2 to 4 also show the comparison between an example and a comparative example that used the same composition ratio of Li, $M\alpha$, $M\beta$, and $M\gamma$. The solid electrolyte according to the example that contained F had a lower reduction onset potential than the solid electrolyte according to the comparative example that did not contain F and exhibited a decrease in the quantity of electricity during decomposition down to 0.1V. As described above, with the same cation ratio, the properties described above changed depending on whether or not F was contained. From the result described above, it has been confirmed that the introduction of F into a solid electrolyte that contains Li, $M\alpha$, $M\beta$, $M\gamma$, and Cl suppresses a reduction decomposition reaction of the solid electrolyte and improves resistance to reduction. It has also been confirmed from Examples 1 and 2 that the resistance to reduction tends to increase as the ratio of the amount of substance of F to the amount of substance of Cl increases.

The reason why the solid electrolyte containing F has improved resistance to reduction is not clear, but focusing on Pauling's electronegativity, F is 3.98 while Cl is 3.16. Thus, it is thought that F is bonded to the cations more tightly than Cl, and this improved bonding force is assumed to contribute to an improvement in the resistance to reduction.

The mechanism for improving the resistance to reduction is considered to remain the same, regardless of the cation type. Specifically, the presence of F is considered to improve the resistance to reduction even if Hf serving as a quadrivalent cation like Zr is used, instead of or together with Zr. The same also applies to the case where both of Ta and Nb are used as $M\beta$. The same yet also applies to the case where Gd, Ho, Eu, and Sc that serve as trivalent cations like Yb, Dy, and Er and that have ionic radii approximate to those of Yb, Dy, and Er are used, instead of or together with Yb, Dy, or Er.

As described thus far, the solid electrolyte according to the present embodiment contains Li, $M\alpha$, $M\beta$, $M\gamma$, Cl and F. $M\alpha$ is at least one element selected from the group consisting of Zr and Hf. $M\beta$ is at least one element selected from the group consisting of Ta and Nb. $M\gamma$ is at least one element selected from the group consisting of Gd, Yb, Dy, Er, Ho, Eu, and Sc. This realizes the solid electrolyte with excellent resistance to reduction. Since the solid electrolyte has a wide potential window, restrictions on the operating voltage can be relaxed when the solid electrolyte is applied to the all-solid-state secondary battery 1, and it is possible to improve the energy density of the all-solid-state secondary battery 1.

A preferable solid electrolyte is expressed by the following composition formula (1):

$$Li_{6-(4+a-b)(1+c)}(M\alpha_{(1-a-b)}M\beta_a M\gamma_b)_{1+c}Cl_{6-d}F_d \dots \qquad (1),$$

where $0 < a$, $0 < b$, $a + b < 1$, $-0.2 \leq c \leq 0.2$, and $0 < d < 6$ are satisfied. By optimizing the amount of fluorine d in the chloride electrolyte expressed by $Li_x MCl_{6-d}F_d$ and the type and combination of the cations M, it is possible to more reliably realize the solid electrolyte with excellent resistance to reduction.

The solid electrolyte and the all-solid-state secondary battery 1 described above may be modified in various ways.

The solid electrolyte containing Li, $M\alpha$, $M\beta$, $M\gamma$, Cl, and F may not satisfy the composition formula (1) given above.

The solid electrolyte may be mixed with a different substance (which may include Li) and used as an electrolyte material. In this case, it is preferable that the solid electrolyte is the component with a highest mass ratio, i.e., the main component, among all components contained in the electrolyte material. The mass ratio of the main component in the electrolyte material is preferably higher than or equal to 50% by mass, more preferably higher than or equal to 60% by mass, and yet more preferably higher than or equal to 70% by mass.

The solid electrolyte used in the all-solid-state secondary battery 1 does not necessarily have to be included in all of the positive electrode 11, the negative electrode 12, and the electrolyte layer 13, and may be included in at least one of the positive electrode 11, the negative electrode 12, and the electrolyte layer 13. The solid electrolyte may also be used in any battery other than the all-solid-state secondary battery, and may be used in applications other than batteries.

The configurations of the above-described preferred embodiment and variations may be appropriately combined as long as there are no mutual inconsistencies.

While the invention has been shown and described in detail, the foregoing description is in all aspects illustrative and not restrictive. It is therefore understood that numerous modifications and variations can be devised without departing from the scope of the invention.

**REFERENCE SIGNS LIST**

1    all-solid-state lithium-ion secondary battery
11   positive electrode
12   negative electrode
13   electrolyte layer

**Claims**

1. A solid electrolyte comprising:

   Li, Mα, Mβ, Mγ, Cl, and F,
   wherein Mα is at least one element selected from a group consisting of Zr and Hf,
   Mβ is at least one element selected from a group consisting of Ta and Nb, and
   Mγ is at least one element selected from a group consisting of Gd, Yb, Dy, Er, Ho, Eu, and Sc.

2. The solid electrolyte according to claim 1, wherein
   Mα includes Zr.

3. The solid electrolyte according to claim 1, wherein
   Mβ includes Ta.

4. The solid electrolyte according to claim 1, wherein
   Mγ includes Gd, Yb, or Er.

5. The solid electrolyte according to claim 1,

   the solid electrolyte being expressed by a composition formula (1) below:

   $$Li_{6-(4+a-b)(1+c)}(M\alpha_{(1-a-b)}M\beta_a M\gamma_b)_{1+c}Cl_{6-d}F_d \ldots \qquad (1),$$

   where $0 < a$, $0 < b$, $a + b < 1$, $-0.2 \leq c \leq 0.2$, and $0 < d < 6$ are satisfied.

6. The solid electrolyte according to claim 1, wherein

   a value obtained by dividing a mean ionic radius of Li, Mα, Mβ, and Mγ by a mean ionic radius of Cl and F is greater than 0.31 and less than 0.43, and
   a difference $\Delta\chi$ between mean electronegativity of Cl and F and mean electronegativity of Mα, Mβ, and Mγ is greater than 1.842.

7. A lithium-ion battery comprising:
   the solid electrolyte according to any one of claims 1 to 6.

FIG. 1

<u>1</u>

111 11
112
13
122
121 12

# EP 4 693 338 A1

## INTERNATIONAL SEARCH REPORT

International application No.

**PCT/JP2023/012624**

### A. CLASSIFICATION OF SUBJECT MATTER

*H01B 1/06*(2006.01)i
FI: H01B1/06 A

According to International Patent Classification (IPC) or to both national classification and IPC

### B. FIELDS SEARCHED

Minimum documentation searched (classification system followed by classification symbols)

H01B1/06

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | US 2021/0043966 A1 (SAMSUNG ELECTRONICS CO., LTD.) 11 February 2021 (2021-02-11) paragraphs [0074], [0093], [0107], [0132], [0205] | 1-4, 6-7 |
| A | | 5 |
| A | WO 2020/188914 A1 (PANASONIC INTELLECTUAL PROPERTY MANAGEMENT CO., LTD.) 24 September 2020 (2020-09-24) | 1-7 |
| A | WO 2021/024783 A1 (TDK CORPORATION) 11 February 2021 (2021-02-11) | 1-7 |
| A | US 2021/0167419 A1 (SAMSUNG ELECTRONICS CO., LTD.) 03 June 2021 (2021-06-03) | 1-7 |

☐ Further documents are listed in the continuation of Box C.          ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **31 May 2023** | **13 June 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/012624**

| Patent document cited in search report | | | Publication date (day/month/year) | Patent family member(s) | | | Publication date (day/month/year) |
|---|---|---|---|---|---|---|---|
| US | 2021/0043966 | A1 | 11 February 2021 | EP | 3778489 | A1 | |
| | | | | KR | 10-2021-0018040 | A | |
| | | | | CN | 112331908 | A | |
| WO | 2020/188914 | A1 | 24 September 2020 | US | 2021/0391594 | A1 | |
| | | | | EP | 3940816 | A1 | |
| | | | | CN | 113474910 | A | |
| WO | 2021/024783 | A1 | 11 February 2021 | US | 2022/0255125 | A1 | |
| | | | | CN | 114207896 | A | |
| US | 2021/0167419 | A1 | 03 June 2021 | EP | 3831779 | A1 | |
| | | | | KR | 10-2021-0068965 | A | |
| | | | | CN | 112993387 | A | |

Form PCT/ISA/210 (patent family annex) (January 2015)

**EP 4 693 338 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6934626 B

- WO 2020070956 A